# EUROPÄISCHE PATENTSCHRIFT

(11) **EP 2 522 208 B1**
(45) Veröffentlichungstag und Bekanntmachung des Hinweises auf die Patenterteilung: **05.07.2017**
(21) Anmeldenummer: 12401079.4
(22) Anmeldetag: 04.05.2012
(51) Int. Cl.: A01C 7/08

(54) **Pneumatische Verteilmaschine**
Pneumatic distribution machine
Machine de répartition pneumatique

(30) Priorität: 12.05.2011 DE 102011050302
(43) Veröffentlichungstag der Anmeldung: 14.11.2012
(73) Patentinhaber: Amazonen-Werke H. Dreyer GmbH & Co. KG, 49205 Hasbergen (DE)
(72) Erfinder: Wilken, Martin, 26123 Oldenburg (DE)

(56) Entgegenhaltungen:
- DE-A1-102005 061 091
- US-A- 4 514 114
- US-A- 4 779 765

## Beschreibung

Die Erfindung betrifft eine pneumatische Verteilmaschine gemäß des Oberbegriffes des Patentanspruches 1.

Eine derartige Verteilmaschine ist beispielsweise durch die DE 10 2005 061 091 A1 bekannt. Diese Verteilmaschine weist einen Vorratsbehälter auf, dessen Auslass mit einer Dosiereinrichtung verschlossen ist. Über die Dosiereinrichtung wird das sich im Vorratsbehälter befindliche Saatgut in einen Injektor eingespeist. Der Injektor ist in einer pneumatischen Förderleitung angeordnet, die zu einem Verteilerkopf führen. Der Verteilerkopf teilt das Material in gleichmäßiger Weise an ihm angeschlossene Abgangsleitungen auf, die zu Ausbringorganen führen. Verteilmaschinen werden mit unterschiedlicher Arbeitsbreite und einer unterschiedlichen Anzahl von Ausbringelementen hergestellt. Der Querschnitt des Injektors muss an die an die Ausbringmenge angepasste Förderleistung und Anzahl der Ausbringelemente angepasst werden. Hierzu ist der Injektor mit Einsatzelementen unterschiedlicher freier Durchlassquerschnitte ausrüstbar. Somit kann jeder Injektor entsprechend der erforderlichen Förderleistung des Förderluftstromes in einfacher Weise ausgerüstet werden.

Das Umrüsten ist jedoch relativ umständlich.

Die US 4,779,765 offenbart eine Verteilmaschine zur separaten Ausbringung von Saatgut und Dünger, wobei im Injektor ein Anteil des Düngers dem Saatgut beigemischt wird.

Der Erfindung liegt die Aufgabe zugrunde, die Menge des Förderluftstromes in der pneumatischen Förderleitung zu dem Verteilerkopf an die erforderliche Luftdurchlassmenge entsprechend der Arbeitsbreite der Verteilmaschine bzw. der Anzahl der an dem Verteilerkopf angeschlossenen und zu Ausbringelementen führenden Abgangsleitungen in vereinfachter Weise anpassen zu können.

Diese Aufgabe wird erfindungsgemäß dadurch gelöst, dass zumindest ein Teil der Wand des Injektors zur Veränderung des freien Durchlassquerschnittes verstellbar ausgebildet ist. Infolge dieser Maßnahme ist lediglich durch das Verstellen eines Teiles der Wand die Förderleistung des Injektors in einfachster Weise einzustellen. Es brauchen keine zusätzlichen Teile eingebaut oder getauscht werden.

Einfache Verstellung lässt sich dadurch verwirklichen, dass ein Teil der Wand des Einlassbereiches des Injektors verstellbar an dem Gehäuse des Injektors verstellbar befestigt ist.

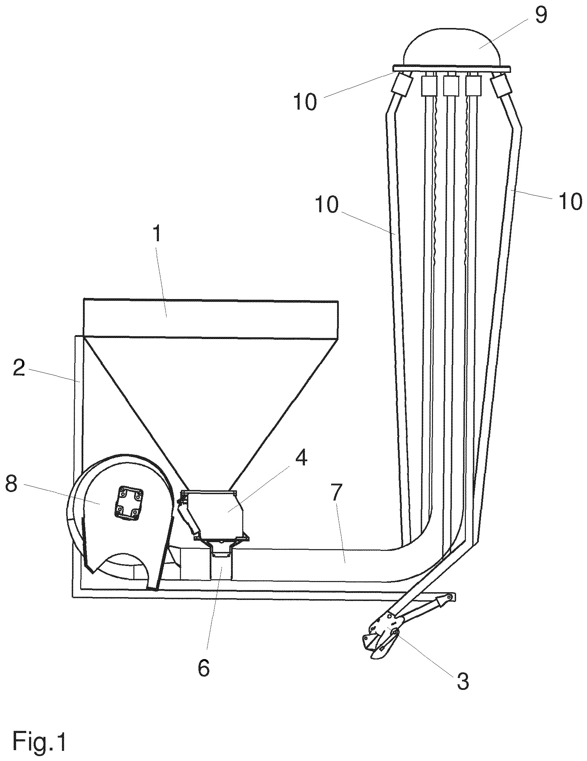

Weitere Einzelheiten der Erfindung sind der Beispielsbeschreibung und den Zeichnungen zu entnehmen. Hierbei zeigen
Fig. 1 die Verteilmaschine in Seitenansicht und in Prinzipdarstellung,
Fig. 2 den Injektor in perspektivischer Darstellung,
Fig. 3 den Injektor in der Draufsicht,
Fig. 4 den Injektor in dem Schnitt IV - IV,
Fig. 5 den Injektor in der Draufsicht, wobei das verstellbare der Wand zur Verkleinerung des Durchlassquerschnittes verstellt ist, und
Fig. 6 den Injektor mit der Einstellung gemäß Fig. 5 in dem Schnitt VI - VI.

Die pneumatische Verteilmaschine weist den Vorratsbehälter 1, den Rahmen 2 und die an dem Rahmen 2 angelenkten Säschare 3 auf. Das sich im Vorratsbehälter 1 befindliche Material wird über die Dosiervorrichtung 4 über die Schleuse 5 des Injektor 6 in die Förderleitung 7, die an eine Gebläse 8 angeschlossen ist eingespeist. Über die Förderleitung 7 gelangt das dosierte Material zu dem als Prallkopf 9 ausgebildete Verteiler, von dem aus das Saatgut auf die einzelnen Auslässe, denen die zu den Säscharen 3 führenden Leitungen 10 angeschlossen sind, aufgeteilt wird. Wie bereits erwähnt, wird über den Injektor 6 das auszubringende Material von der Dosiereinrichtung 4 in die Förderleitung 7 eingespeist. Der Injektor 6 weist im Schleusenbereich 5 einen verstellbaren Teil 11 der Wand 12 des Gehäuses des Injektors 6 zur Einstellung des Durchlassquerschnittes 13 auf, um jeweils eine entsprechend den Ausbringverhältnissen angepassten freien Durchlassquerschnitt 13 zur Einstellung der Förderleistung einstellen zu können.

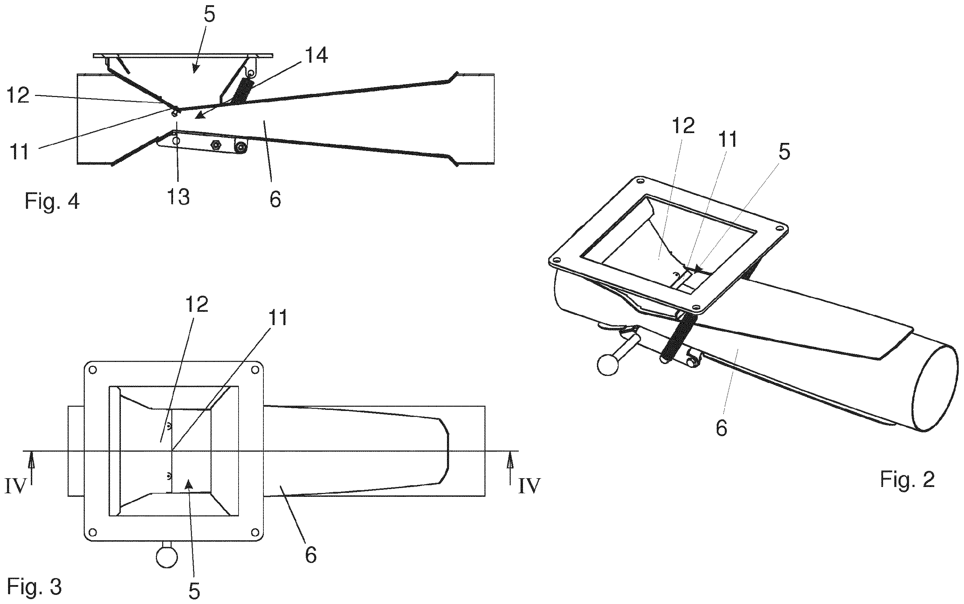

Gemäß dem Ausführungsbeispiel gemäß Fig. 4 weist der Injektor 6 entsprechend der Einstellung des Teiles 11 der Wand 12 einen relativ großen freien Durchlassquerschnitt 13 auf. Einen derartig eingestellten Injektor 6 mit einem großen freien Durchlassquerschnitt 13 der Treibdüse 14 des Injektors 6 wird man für Verteilmaschinen einsetzen, bei denen ein großer Luft- und Materialdurchlass gewährleistet werden muss, um große Ausbringmengen und/oder große Arbeitsbreiten zu verwirklichen, d.h., dass an einem Verteilerkopf 9 relativ viele Saatleitungen 10 angeschlossen sind.

Wenn der Injektor 6 bei einer Verteilmaschine eingesetzt wird, bei der eine geringe Luftförderleistung und geringer Materialdurchsatz, aufgrund geringer Ausbringmengen oder kleiner Arbeitsbreiten gegeben sind, wird der Teil 11 der

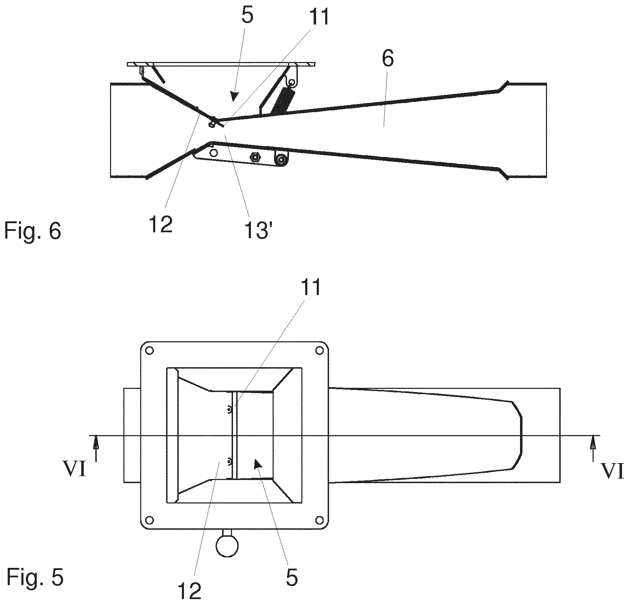

Wand des Injektors 6 erfindungsgemäß in die Position gemäß den Fig. 5 und 6 eingestellt, so sich ein kleinerer freier Durchlassquerschnitt 13' ergibt, wie Fig. 5 zeigt.

## Patentansprüche

1. Pneumatische Verteilmaschine mit einem Vorratsbehälter (1), Dosiereinrichtung (4), eine pneumatische beaufschlagte und zu einem Verteilerkopf (9) führende Förderleitung (7) mit Injektor (6), wobei über den Injektor (6) das auszubringende Material von der Dosiereinrichtung (4) in die Förderleitung (7) eingespeist wird,
**dadurch gekennzeichnet, dass**
der freie Durchlassquerschnitt (13, 13') der Treibdüse (14) des Injektors (6) veränderbar ist, und wobei zumindest ein Teil (11) der Wand (12) des Injektors (6) zur Veränderung des freien Durchlassquerschnitts (13, 13') verstellbar ausgebildet ist.

2. Verteilmaschine nach Anspruch 1, **dadurch gekennzeichnet, dass** ein Teil (11) der Wand (12) des Einlassbereiches des Injektors (6) verstellbar an dem Gehäuse des Injektors (6) verstellbar befestigt ist.

## Claims

1. Pneumatic distribution machine with a storage container (1), metering device (4) and a pneumatic and charged delivery line (7) which leads to a distributor head (9) and has an injector (6), wherein the material to be discharged is fed by the metering device (4) into the delivery line (7) via the injector (6), **characterized in that** the free passage cross section (13, 13') of the driving nozzle (14) of the injector (6) can be changed, and wherein at least one part (11) of the wall (12) of the injector (6) is of adjustable design in order to change the free passage cross section (13, 13').

2. Distribution machine according to Claim 1, **characterized in that** a part (11) of the wall (12) of the inlet region of the injector (6) is adjustably fastened adjustably to the housing of the injector (6).

## Revendications

1. Machine de répartition pneumatique comprenant un réservoir (1), un dispositif de dosage (4), une conduite de transport (7) pneumatique sollicitée et conduisant à une tête de répartition (9), avec un injecteur (6), la matière à répandre étant injectée dans la conduite de transport (7) depuis le dispositif de dosage (4) par le biais de l'injecteur (6),
**caractérisée en ce que** la section transversale de passage libre (13, 13') de la buse d'entraînement (14) de l'injecteur (6) peut être modifiée et au moins une partie (11) de la paroi (12) de l'injecteur (6) étant réalisée de manière réglable pour modifier la section transversale de passage libre (13, 13).

2. Machine de répartition selon la revendication 1, **caractérisée en ce qu'**une partie (11) de la paroi (12) de la région d'entrée de l'injecteur (6) est de manière réglable fixée de manière réglable au niveau du boîtier de l'injecteur (6).
